(19) Europäisches Patentamt
European Patent Office
Office européen des brevets

(11) **EP 3 564 291 A1**

(12) **EUROPEAN PATENT APPLICATION**

(43) Date of publication:
**06.11.2019 Bulletin 2019/45**

(21) Application number: **18197296.9**

(22) Date of filing: **27.09.2018**

(51) Int Cl.:
*C08G 63/195* (2006.01) *C08G 63/60* (2006.01)
*C08G 63/64* (2006.01) *C08G 77/448* (2006.01)
*C08L 69/00* (2006.01) *C08L 83/10* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2018 US 201862664419 P**

(71) Applicant: **SABIC Global Technologies B.V.**
**4612 PX Bergen op Zoom (NL)**

(72) Inventors:
- **SOHN, Sungkyun**
  **Houston, Texas 77042 (US)**
- **HARDING, Gerould James**
  **Houston, Texas 77042 (US)**

(74) Representative: **Modiano, Micaela Nadia et al**
**Modiano & Partners**
**Thierschstrasse 11**
**80538 München (DE)**

(54) **COPOLYMER FIBER AND ASSOCIATED METHOD AND ARTICLE**

(57) A copolymer fiber is prepared from a composition that includes specific amounts of a block polyestercarbonate-polysiloxane and a flame retardant. The fiber has an equivalent circular diameter of 10 to 60 micrometers. Also described are a method of forming the fiber, and various articles incorporating the fiber, including woven fabrics, knit fabrics, and nonwoven fabrics.

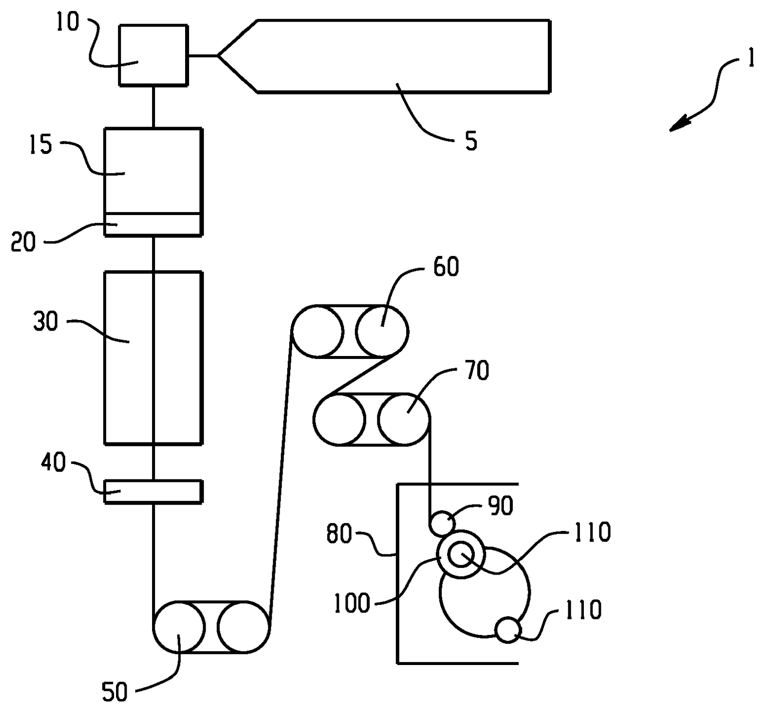


EP 3 564 291 A1

## Description

BACKGROUND OF THE INVENTION

Polyestercarbonate-polysiloxanes are copolymers exhibiting a desirable balance of flame retardancy and ductility. To date, such copolymers and their compositions have been used primarily in injection molding, sheet extrusion, and additive manufacturing applications. Polyestercarbonate-polysiloxanes have been used for the production of fibers. See, for example, U.S. Patent Application Publication No. US 2013/0260088 A1 of David et al. However, there is a need for polyestercarbonate-polysiloxane compositions that exhibit more robust process characteristics for melt spinning of fibers.

BRIEF SUMMARY OF EMBODIMENTS OF THE INVENTION

One embodiment is a copolymer fiber: wherein the copolymer fiber comprises a composition comprising, based on the total weight of the composition, 90 to 98 weight percent of a block polyestercarbonate-polysiloxane comprising a polyester block comprising resorcinol ester units having the structure

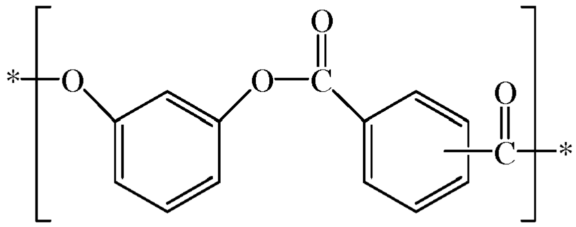

,

a polycarbonate block comprising carbonate units having the structure

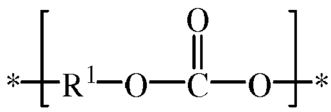

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

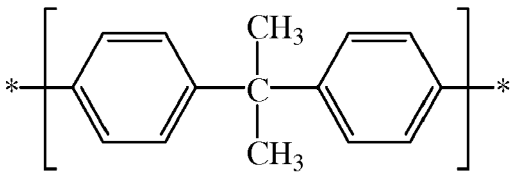

,

and further comprises, based on the weight of the block polyestercarbonate-polysiloxane, 0.2 to 4 weight percent dimethylsiloxane units; and 2 to 10 weight percent of a flame retardant; wherein the fiber has an equivalent circular diameter of 10 to 60 micrometers.

Another embodiment is a method of forming a fiber, the method comprising: melt spinning a composition to form a fiber; wherein the composition comprises, based on the total weight of the composition, 90 to 98 weight percent of a block polyestercarbonate-polysiloxane comprising a polyester block comprising resorcinol ester units having the structure

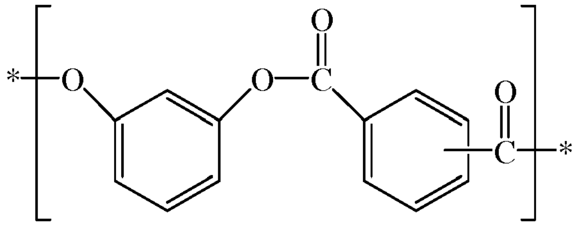

,

a polycarbonate block comprising carbonate units having the structure

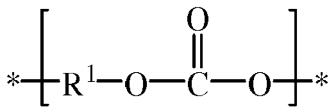

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

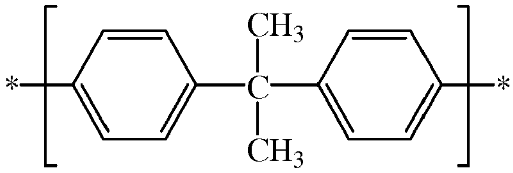

,

and
further comprises, based on the weight of the block polyestercarbonate-polysiloxane, 0.2 to 4 weight percent dimethylsiloxane units; and 2 to 10 weight percent of a flame retardant; and wherein the fiber has an equivalent circular diameter of 10 to 60 micrometers.

Another embodiment is an article comprising the fiber.

These and other embodiments are described in detail below.

BRIEF DESCRIPTION OF THE DRAWING

The Figure is a schematic illustration of a melt spinning apparatus.

DETAILED DESCRIPTION OF THE INVENTION

The present inventors have determined that more robust process characteristics for melt spinning of fibers, reduced hot air shrinkage, and reduced heat release rates are exhibited by melt-spun fibers prepared from a composition comprises specific amounts of a block polyestercarbonate-polysiloxane and a flame retardant.

Thus, one embodiment is a copolymer fiber, wherein the copolymer fiber comprises a composition comprising, based on the total weight of the composition, 90 to 98 weight percent of a block polyestercarbonate-polysiloxane comprising a polyester block comprising resorcinol ester units having the structure

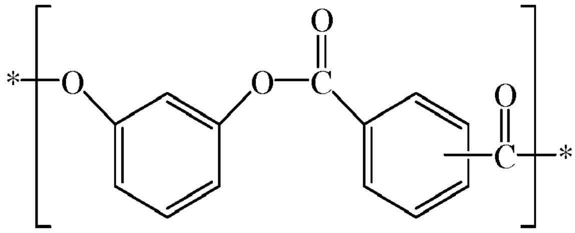

,

a polycarbonate block comprising carbonate units having the structure

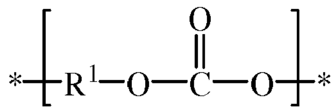

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

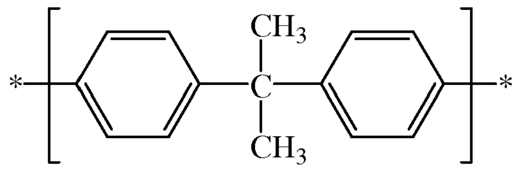,

and
further comprises, based on the weight of the block polyestercarbonate-polysiloxane, 0.2 to 4 weight percent dimethylsiloxane units; and 2 to 10 weight percent of a flame retardant; wherein the fiber has an equivalent circular diameter of 10 to 60 micrometers.

The copolymer fiber is prepared from a composition comprising a block polyestercarbonate-polysiloxane. A block polyestercarbonate-polysiloxane is a copolymer comprising at least one polyester block, at least one polycarbonate block, and at least one polysiloxane block. Specifically, the at least one polyester block comprises resorcinol ester units, each resorcinol ester unit having the structure

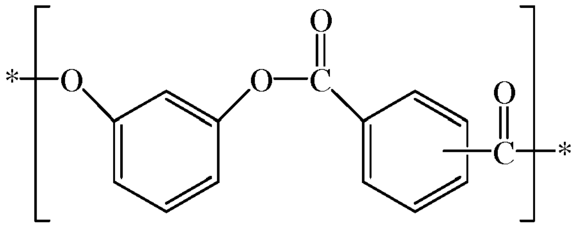,

the at least one polycarbonate block comprises carbonate units, each carbonate unit having the structure

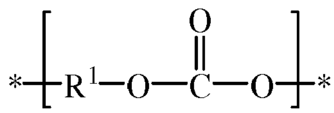

wherein at least 60 percent of the total number of $R^1$ groups are aromatic divalent groups, and the at least one polysiloxane block comprises dimethylsiloxane units.

In some embodiments, the aromatic divalent groups are $C_6$-$C_{24}$ aromatic divalent groups. When not all $R^1$ groups are aromatic, the remainder are $C_2$-$C_{24}$ aliphatic divalent groups. In some embodiments, each $R^1$ is a radical of the formula

$$*\!-\!\left[A^1-Y^1-A^2\right]\!-\!*$$

wherein each of $A^1$ and $A^2$ is independently a monocyclic divalent aryl radical, and $Y^1$ is a bridging radical having one or two atoms that separate $A^1$ from $A^2$. Examples of $A^1$ and $A^2$ include 1,3-phenylene and 1,4-phenylene, each optionally substituted with one, two, or three $C_1$-$C_6$ alkyl groups. The bridging radical $Y^1$ can be a $C_1$-$C_{12}$ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can

also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In some embodiments, one atom separates $A^1$ from $A^2$. Illustrative examples of $Y^1$ radicals are -O-, -S-, -S(O)-, $-S(O)_2-$, -C(O)-, methylene ($-CH_2-$; also known as methylidene), ethylidene ($-CH(CH_3)-$), isopropylidene ($-C(CH_3)_2-$), neopentylidene, cyclohexylidene, cyclopentadecylidene, cyclododecylidene, adamantylidene, cyclohexylidene methylene, cyclohexylmethylene, and 2-[2.2.1]-bicycloheptylidene.

In some embodiments, the resorcinol ester units comprise resorcinol isophthalate/terephthalate units, and the carbonate units comprise resorcinol carbonate units and bisphenol A carbonate units.

The block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene (i.e., the carbonate units are resorcinol carbonate units), and 5 to 35 mole percent of carbonate units wherein $R^1$ is

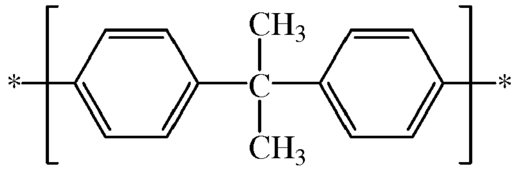

(i.e., the carbonate units are bisphenol A carbonate units). Within the range of 30 to 90 mole percent, the amount of resorcinol ester units can be 50 to 90 mole percent, or 70 to 90 mole percent. Within the range of 5 to 35 mole percent, the amount of resorcinol carbonate units can be 5 to 25 mole percent, or 5 to 15 mole percent. Within the range of 5 to 35 mole percent, the amount of bisphenol A carbonate units can be 5 to 25 mole percent, or 5 to 15 mole percent. The block polyestercarbonate-polysiloxane further comprises, based on the weight of the block polyestercarbonate-polysiloxane, 0.2 to 4 weight percent dimethylsiloxane units. Within this range, the amount of dimethylsiloxane units can be 0.4 to 2 weight percent, or 0.5 to 2 weight percent.

In a very specific embodiment, the block polyestercarbonate-polysiloxane comprises, based on total moles of carbonate and ester units, 70 to 90 mole percent of resorcinol isophthalate/terephthalate units, 5 to 15 mole percent of resorcinol carbonate units, and 5 to 15 mole percent of bisphenol A carbonate units, and further comprises dimethylsiloxane units in an amount, based on the total weight of the block polyestercarbonate-polysiloxane, of 0.5 to 2 weight percent.

There is no particular limit on the structure of end groups on the block polyestercarbonate-polysiloxane. An end-capping agent (also referred to as a chain stopping agent or chain terminating agent) can be included during polymerization to provide end groups. Examples of end-capping agents include monocyclic phenols such as phenol, p-cyanophenol, and $C_1$-$C_{22}$ alkyl-substituted phenols such as p-cumylphenol, resorcinol monobenzoate, and p-tertiary-butyl phenol; monoethers of diphenols, such as p-methoxyphenol; monoesters of diphenols such as resorcinol monobenzoate; functionalized chlorides of aliphatic monocarboxylic acids such as acryloyl chloride and methacryoyl chloride; and mono-chloroformates such as phenyl chloroformate, alkyl-substituted phenyl chloroformates, p-cumyl phenyl chloroformate, and toluene chloroformate. Combinations of different end groups can be used. In some embodiments, the block polyestercarbonate-polysiloxane has a weight average molecular weight of 15,000 to 55,000 grams/mole, as determined by gel permeation chromatography using polycarbonate standards. Within this range, the weight average molecular weight can be 18,000 to 50,000 grams/mole.

Methods for the preparation of block polyestercarbonate-polysiloxanes are known and described, for example, in U.S. Patent No. 7,790,292 B2 to Colborn et al.

The composition comprises the block polyestercarbonate-polysiloxane in an amount of 90 to 98 weight percent, based on the total weight of the composition. Within this range, the amount of block polyestercarbonate-polysiloxane can be 90 to 97 weight percent, or 91 to 96 weight percent.

In addition to the block polyestercarbonate-polysiloxane, the composition comprises a flame retardant. A flame retardant is a chemical compound or mixture of chemical compounds capable of improving the flame retardancy of the thermoplastic composition. Suitable flame retardants include organophosphate esters, metal dialkylphosphinates, melamine-containing flame retardants, and combinations thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No.

115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof. In some embodiments, the flame retardant excludes brominated polycarbonate. In some embodiments, the flame retardant is halogen-free. In some embodiments, the organophosphate ester comprises an oligomeric phosphate ester, which can be a halogen-free oligomeric phosphate ester.

In some embodiments, the flame retardant comprises a metal dialkylphosphinate. As used herein, the term "metal dialkylphosphinate" refers to a salt comprising at least one metal cation and at least one dialkylphosphinate anion. In some embodiments, the metal dialkylphosphinate has the formula

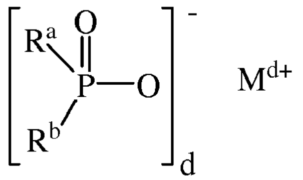

wherein $R^a$ and $R^b$ are each independently $C_1$-$C_6$ alkyl; M is calcium, magnesium, aluminum, or zinc; and d is 2 or 3. Examples of $R^a$ and $R^b$ include methyl, ethyl, n-propyl, isopropyl, n-butyl, tert-butyl, and n-pentyl. In some embodiments, $R^a$ and $R^b$ are ethyl, M is aluminum, and d is 3 (that is, the metal dialkylphosphinate is aluminum tris(diethylphosphinate)).

In some embodiments, the flame retardant comprises a melamine-containing flame retardant. Melamine-containing flame retardants include those comprising a melamine-containing base and a phosphate or pyrophosphate or polyphosphate or cyanurate acid. In some embodiments, the melamine-containing flame retardant has the formula

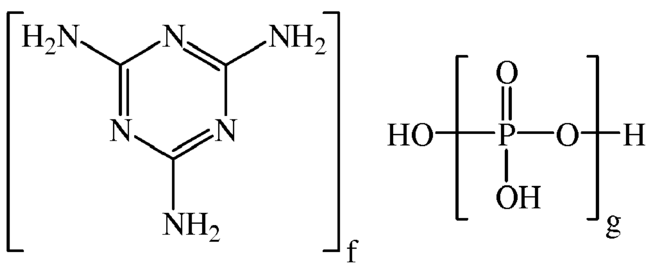

wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the melamine-containing flame retardant is melamine phosphate (CAS Reg. No. 20208-95-1). When g is 2, the melamine-containing flame retardant is melamine pyrophosphate (CAS Reg. No. 15541 60-3). When g is, on average, greater than 2, the melamine-containing flame retardant is a melamine polyphosphate (CAS Reg. No. 56386-64-2). In some embodiments, the melamine-containing flame retardant is melamine pyrophosphate, melamine polyphosphate, or a mixture thereof. In some embodiments in which the melamine-containing flame retardant is melamine polyphosphate, g has an average value of greater than 2 to 10,000, specifically 5 to 1,000, more specifically 10 to 500. In some embodiments in which the melamine-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510 to Jacobson et al. In some embodiments, the melamine-containing flame retardant comprises melamine cyanurate.

The composition comprises the flame retardant in an amount of 2 to 10 weight percent of, based on the total weight of the composition. Within this range, the flame retardant amount can be about 3 to 10 weight percent, or 4 to 9 weight percent.

The composition can, optionally, further comprise one or more additives known in the thermoplastics art. Suitable additives include, for example, stabilizers, mold release agents, lubricants, processing aids, drip retardants, nucleating agents, UV blockers, dyes, pigments, antioxidants, anti-static agents, blowing agents, mineral oil, metal deactivators, antiblocking agents, and combinations thereof. When present, such additives are typically used in a total amount of less than or equal to 2 weight percent, based on the total weight of the composition. In some embodiments, additives are used in an amount less than or equal to 1 weight percent, or less than or equal to 0.5 weight percent. In some embodiments, the composition comprises 0 to 1 part per million by weight of colorants. In some embodiments, the composition excludes

colorants.

In some embodiments of the fiber, the composition comprises, based on the total weight of the composition, 91 to 96 weight percent of the block polyestercarbonate-polysiloxane, and 4 to 9 weight percent of the flame retardant.

In some embodiments of the fiber, the total amount of the block polyestercarbonate-polysiloxane and the flame retardant is 98 to 100 weight percent, or 99 to 100 weight percent.

In some embodiment of the fiber, the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is

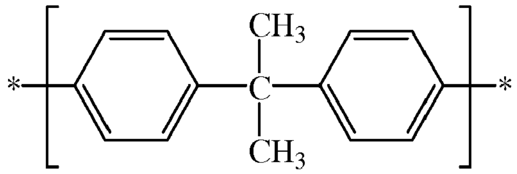

,

and

further comprises, based on the weight of the block polyestercarbonate-polysiloxane, 0.5 to 2 weight percent dimethylsiloxane units.

In some embodiments, the composition excludes polycarbonates. In some embodiments, the composition excludes polyesters. In some embodiments, the composition excludes polyestercarbonates. In some embodiments, the composition excludes impact modifiers. In some embodiments, the composition excludes polycarbonates and polyesters and polyestercarbonates and impact modifiers.

The fiber has an equivalent circular diameter of 10 to 60 micrometers. The equivalent circular diameter of a fiber is the diameter of circle having the same area as the cross-section of the fiber under consideration. For example, if the fiber under consideration has a square cross section with an area of 400 micrometer$^2$, that fiber has an equivalent circular diameter of 22.57 micrometers. Within the range of 10 to 60 micrometers, the equivalent circular diameter can be 15 to 50 micrometers. There is no particular limitation on the shape of the fiber cross-section, which can be, for example, circular or oval or triangular or square or rectangular. In some embodiments, the fiber cross-section is circular.

Another embodiment is a method of forming a fiber, the method comprising: melt spinning a composition to form a fiber; wherein the composition comprises, based on the total weight of the composition, 90 to 98 weight percent of a block polyestercarbonate-polysiloxane comprising a polyester block comprising resorcinol ester units having the structure

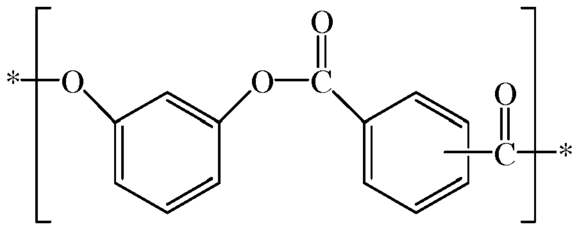

,

a polycarbonate block comprising carbonate units having the structure

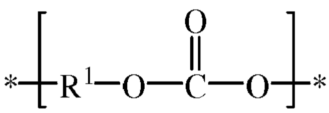

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

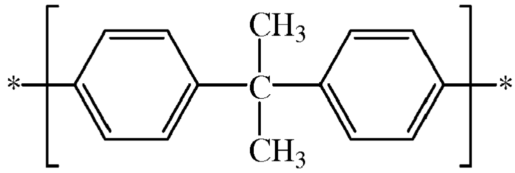

,

and

further comprises, based on the weight of the block polyestercarbonate-polysiloxane, 0.2 to 4 weight percent dimethylsiloxane units; and 2 to 10 weight percent of a flame retardant; and wherein the fiber has an equivalent circular diameter of 10 to 60 micrometers.

All of the compositional variations described above in the context of the fiber apply as well to the method of forming a fiber.

In some embodiments, the melt spinning is characterized by a draw down ratio of 280 to 550, an apparent shear rate of 170 to 1700 second$^{-1}$, and a mechanical draw ratio of 0.95 to 1.2. Draw down ratio, which is unitless, is defined as the ratio of speed (in meters/minute) at which the melt exits the spinneret nozzles to the speed (in meters/minute) of the fiber at the first godet. Within the range of 280 to 550, the draw down ratio can be 350 to 450. Apparent shear rate (in units of second$^{-1}$) is defined according to the equation

$$\text{Apparent shear rate (second}^{-1}\text{)} = 4Q/\pi R^3 \rho$$

wherein *Q* is the melt throughput per spinneret nozzle (in grams/second), *R* is the nozzle radius (in centimeters), and *p* is the polymer melt density (in grams/centimeter$^3$). Within the range of 170 to 1700 second$^{-1}$, the apparent shear rate can be 275 to 990 second$^{-1}$. Mechanical draw ratio, which is unitless, is defined as the ratio of the first godet speed (in meters/minute) to the winder speed (in meters/minute). Within the range of 0.95 to 1.2, the mechanical draw ratio can be 0.98 to 1.1.

Another embodiment is an article comprising the fiber in any of its above-described variations. In some embodiments, the article comprises a woven fabric comprising the fiber. In other embodiments, the article comprises a knit fabric comprising the fiber. In still other embodiments, the article comprises a nonwoven fabric comprising the fiber. Nonwoven fabrics can be prepared by methods including, for example, wet-laid, dry-laid, air-laid, melt-blown, spunbond, and spunlace.

The invention includes at least the following aspects.

Aspect 1: A copolymer fiber, wherein the copolymer fiber comprises a composition comprising, based on the total weight of the composition, 90 to 98 weight percent of a block polyestercarbonate-polysiloxane comprising a polyester block comprising resorcinol ester units having the structure

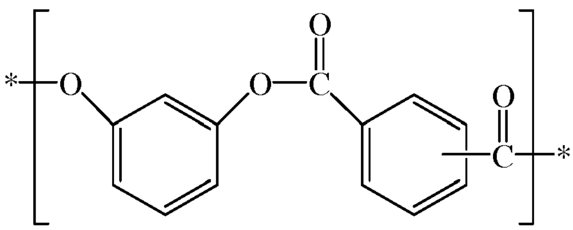

,

a polycarbonate block comprising carbonate units having the structure

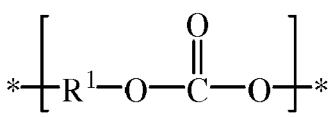

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of

carbonate units wherein $R^1$ is 1,3-phenylene, and 5 to 35 mole percent of carbonate units wherein $R^1$ is

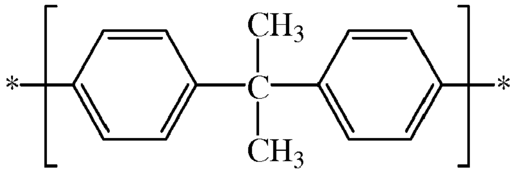

,

and

further comprises, based on the weight of the block polyestercarbonate-polysiloxane, 0.2 to 4 weight percent dimethylsiloxane units; and 2 to 10 weight percent of a flame retardant; wherein the fiber has an equivalent circular diameter of 10 to 60 micrometers.

Aspect 2: The fiber of aspect 1, wherein the block polyestercarbonate-polysiloxane comprises 0.5 to 2 weight percent dimethylsiloxane units.

Aspect 3: The fiber of aspect 1 or 2, wherein the flame retardant comprises an organophosphate ester.

Aspect 4: The fiber of aspect 3, wherein the organophosphate ester comprises an oligomeric phosphate ester.

Aspect 5: The fiber of any one of aspects 1-4, wherein the composition comprises, based on the total weight of the composition, 91 to 96 weight percent of the block polyestercarbonate-polysiloxane, and 4 to 9 weight percent of the flame retardant.

Aspect 6: The fiber of any one of aspects 1-5, wherein the total amount of the block polyestercarbonate-polysiloxane and the flame retardant is 98 to 100 weight percent.

Aspect 7: The fiber of any one of aspects 1-6, wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is

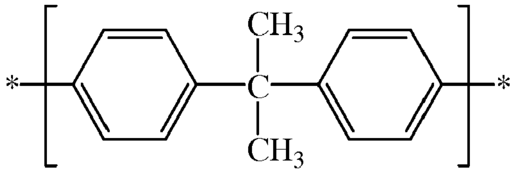

,

and

further comprises, based on the weight of the block polyestercarbonate-polysiloxane, 0.5 to 2 weight percent dimethylsiloxane units.

Aspect 8: The fiber of any one of aspects 1-7, wherein the composition comprises 0 to 1 part per million by weight of colorants.

Aspect 9: A method of forming a fiber, the method comprising: melt spinning a composition to form a fiber; wherein the composition comprises, based on the total weight of the composition, 90 to 98 weight percent of a block polyestercarbonate-polysiloxane comprising a polyester block comprising resorcinol ester units having the structure

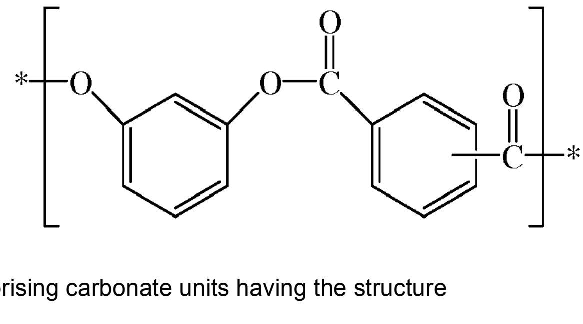

,

a polycarbonate block comprising carbonate units having the structure

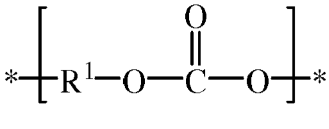

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

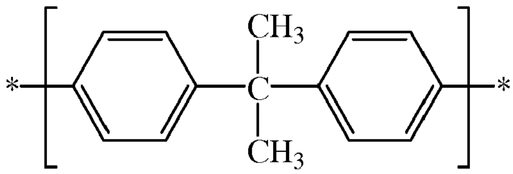

,

and

further comprises, based on the weight of the block polyestercarbonate-polysiloxane, 0.2 to 4 weight percent dimethylsiloxane units; and 2 to 10 weight percent of a flame retardant; and wherein the fiber has an equivalent circular diameter of 10 to 60 micrometers.

Aspect 10: The method of aspect 9, wherein the melt spinning is characterized by a draw down ratio of 280 to 550, an apparent shear rate of 170 to 1700 $second^{-1}$, and a mechanical draw ratio of 0.95 to 1.2.

Aspect 11: An article comprising the fiber of any one of aspects 1-8.

Aspect 12: The article of aspect 11, wherein the article comprises a woven fabric comprising the fiber.

Aspect 13: The article of aspect 11, wherein the article comprises a knit fabric comprising the fiber.

Aspect 14: The article of aspect 11, wherein the article comprises a nonwoven fabric comprising the fiber.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

EXAMPLES

Materials used in these examples are summarized in Table 1.

Table 1

| Component | Description |
|---|---|
| PEC-Si | para-Cumylphenol endcapped block polyestercarbonate-polysiloxane with about 99 weight percent total of polyester blocks and polycarbonate blocks, and about 1 weight percent polysiloxane blocks; the polyestercarbonate portion contains about 80 mole percent 1,3-phenylene isophthalate-co-terephthalate units, about 9 mole percent resorcinol carbonate units, and about 11 mole percent bisphenol A carbonate units; the polysiloxane blocks have, on average, about 10 dimethylsiloxane units per block; the polyestercarbonate-polysiloxane has a weight average molecular weight of about 24,500 grams/mole and is preparable by the procedure of Example 2-14 of Method 2 as described in US Patent No. 7,790,292 B2 to Colburn et al., except that the p-cumylphenol level was adjusted to achieve a weight average molecular weight of about 24,500 grams/mole. |
| PEC | para-Cumylphenol endcapped block polyestercarbonate with polyester blocks containing 1,3-phenylene isophthalate-*co*-terephthalate units, and carbonate blocks containing bisphenol A carbonate and resorcinol carbonate units; the copolymer has about 82 mole percent resorcinol ester (50:50 isophthalate/terephthalate) units, about 9 mole percent resorcinol carbonate units, and about 9 mole percent bisphenol A carbonate units; it has a weight average molecular weight of about 20,000 grams/mole, and is preparable by the procedure of Comparative Example 2-4 of U.S. Patent No. 7,790,292 B2 to Colborn. |
| OPE | Oligomeric phosphate ester flame retardant containing 10.7% phosphorus and having a melting range of 101-108 °C; obtained in pastille form as FYROLFLEX™ SOL-DP flame retardant from ICL Industrial Products. |

(continued)

| Component | Description |
|---|---|
| BrPC | Brominated polycarbonate, prepared by copolymerization of phosgene and a 50:50 weight/weight mixture of 2,2',6,6'-tetrabromo-4,4'-isopropylidenediphenol and bisphenol A, and having a weight average molecular weight of about 22,500 grams/mole; preparable according to the method for forming "TBBPA-BPA Copolymer" in columns 26-27 of U.S. Patent No. 9,006,324 to Sybert et al. |
| TBPDP | Tetrakis(2,4-di-tert-butylphenyl)4,4'-biphenyldiphosphonite, CAS Reg. No. 119345-01-6; obtained as IRGAFOS™ P-EPQ from BASF. |
| SV36 | Solvent Violet 36, CAS Reg. No. 61951-89-1. |
| PB60 | Pigment Blue 60, CAS Reg. No. 81-77-6. |

Compositions are summarized in Table 2, where component amounts are expressed in weight percent based on the total weight of the composition. Compositions were prepared by dry blending all components, and the resulting mixture was added to the feed throat of a twin-screw extruder operating with zone temperatures ranging from 230 to 300 °C. The extrudate was cooled in water before being pelletized.

Table 2

| | Ex. 1 | Ex. 2 | C. Ex. 1 | C. Ex. 2 |
|---|---|---|---|---|
| PEC-Si | 93.44 | 93.44 | 49.97 | 87.95 |
| PEC | 0.00 | 0.00 | 49.97 | 0.00 |
| OPE | 6.50 | 6.50 | 0.00 | 0.00 |
| BrPC | 0.00 | 0.00 | 0.00 | 11.99 |
| TBPDP | 0.06 | 0.06 | 0.06 | 0.06 |
| SV36 | 0.00 | 0.00035 | 0.00 | 0.00 |
| PB60 | 0.00 | 0.00044 | 0.00 | 0.00 |

Pellets were dried at 80 to 120 °C for 6 to 12 hours before being fed to the hopper of the melt spinning apparatus. Melt spinning was carried out on a melt spinning apparatus that is schematically illustrated in the Figure. In the Figure, melt spinning apparatus **1** comprises extruder **5**, in which dried pellets are converted to a melt, melt pump **10**, which conveys the melt to spin pack **15**, where it is filtered, then to spinneret **20**, where multiple fibers are formed from the filtered melt. The fibers are immediately conveyed to quench section **30**, where the fibers are air-cooled and solidified. The cooled fibers then enter spin finish section **40**, where a spin finish can be applied to the surface of the fibers. The fibers then traverse a sequence of godet pairs comprising first godets **50**, second godets **60**, and third godets **70**, where the fibers are drawn (stretched). The fibers then enter winder section **80**, where contact roller **90** facilitates formation of wound fiber **100** about one of two winding cores **110**.

In these experiments, the melt pump was operated at 10 centimeter$^3$/revolution. Extruder and melt pump temperatures were 280 to 330 °C. A 144-hole, single-position spinneret was used. Spinneret holes (nozzles) were all circular with a diameter varying, depending on the experiment, from 0.4 to 0.8 millimeters. The length-to-diameter ratio of each spinneret was 4:1. A 325 U.S. mesh (44 micrometer opening) screen filter was used in the spinpack for filtration of the composition melt. After fibers exited the nozzles, they were solidified by quenching with air at ambient temperature (about 23 °C). Individual filaments were combined to form multi-filament threads, then a spin finish (an acrylamide copolymer in an oil-in-water emulsion, obtained as LUROL™ PS-11744 from Goulston) was applied to the multi-filament threads before they contacted the first godet. The draw down ratio ranged from 140 for a 16 denier per fiber (dpf) experiment to 2200 for a 2 dpf experiment. The apparent shear rate ranged from 43 for a 2 dpf experiment to 3420 for a 16 dpf experiment. The mechanical draw ratio ranged from 0.95 to 1.2.

For the Example 1 composition, the best fiber production was associated with a draw down ratio of 280 to 550 (with 350 to 450 being preferred), an apparent shear rate of 170 to 1700 second$^{-1}$ (with 275 to 990 second$^{-1}$ preferred), and a mechanical draw ratio of 0.95 to 1.2 (with 0.98 to 1.1 preferred). At draw down ratios substantially less than 280, the fiber produced did not exhibit a uniform diameter and the productivity of the process was too low to be commercially practical. At draw down ratios substantially greater than 550, mechanical breakage of fibers from some of the 144 nozzles was observed, leading to thread breaks. At apparent shear rates substantially less than 170 second$^{-1}$, the fiber produced

did not exhibit a uniform diameter. At apparent shear rates substantially greater than 1700 $second^{-1}$, melt fracture leading to a thread break was observed. At mechanical draw ratios substantially less than 0.95, frequent thread breakage on the godets was observed. At mechanical draw ratios substantially greater than 1.2, thread on the godets generated fluffs due to filament breakage.

For the Example 2 composition, the melt spinning process was acceptable, but not as favorable as for the Example 1 composition. Specifically, relative to the Example 1 composition, the Example 2 composition was associated with about three times more thread breaks per unit time. And for the Example 2 composition, most of those thread breaks occurred between the spinneret and the first godets.

For the Comparative Example 1 composition, the melt spinning process was not stable over the entire process space studied. In particular, while fibers could be extruded, they could not be drawn without unacceptable fiber breakage.

For the Comparative Example 2 composition, the melt spinning process had low fiber yields. Fiber breakage occurred within three to ten minutes, on average. Fibers could be created and drawn, but the rate of fiber breakage was unacceptable.

Hot Air Shrinkage was determined as follows. A length of fibers (90 meters in total length, 1 meter per turn) was collected. This collection, called a skein, was prepared using a denier wheel. The skein was held on a hook, and its length, $L_0$, with a base weight of each individual fiber being less than 0.1 gram/denier, was measured in millimeters. The skein was kept for twenty minutes in a convection oven set at a temperature 20 °C less than the glass transition temperature ($T_g$) of the composition. The skein was removed from the convection oven and cooled to ambient temperature. Its length, $L_1$, was measured in millimeters. The Hot Air Shrinkage, expressed in units of percent, was calculated as $100\times(L_0-L_1)/L_0$. For the Example 1 composition, the Hot Air Shrinkage was 1.5%.

**Claims**

1. A copolymer fiber:

wherein the copolymer fiber comprises a composition comprising, based on the total weight of the composition,

90 to 98 weight percent of a block polyestercarbonate-polysiloxane comprising a polyester block comprising resorcinol ester units having the structure

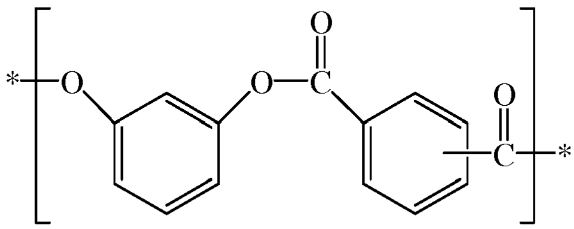

,

a polycarbonate block comprising carbonate units having the structure

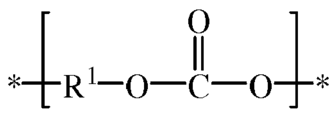

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

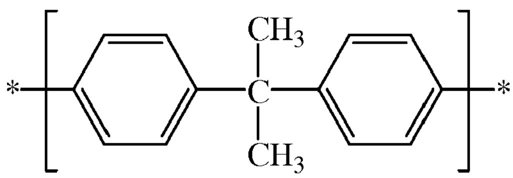

,

and

further comprises, based on the weight of the block polyestercarbonate-polysiloxane, 0.2 to 4 weight percent dimethylsiloxane units; and

2 to 10 weight percent of a flame retardant;

wherein the fiber has an equivalent circular diameter of 10 to 60 micrometers.

**2.** The fiber of claim 1, wherein the block polyestercarbonate-polysiloxane comprises 0.5 to 2 weight percent dimethylsiloxane units.

**3.** The fiber of claim 1 or 2, wherein the flame retardant comprises an organophosphate ester.

**4.** The fiber of claim 3, wherein the organophosphate ester comprises an oligomeric phosphate ester.

**5.** The fiber of any one of claims 1-4, wherein the composition comprises, based on the total weight of the composition, 91 to 96 weight percent of the block polyestercarbonate-polysiloxane, and 4 to 9 weight percent of the flame retardant.

**6.** The fiber of any one of claims 1-5, wherein the total amount of the block polyestercarbonate-polysiloxane and the flame retardant is 98 to 100 weight percent.

**7.** The fiber of any one of claims 1-6, wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is

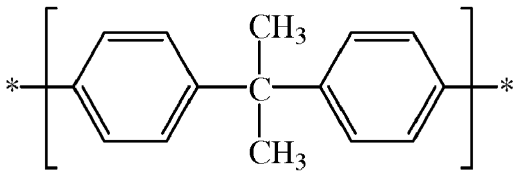,

and

further comprises, based on the weight of the block polyestercarbonate-polysiloxane, 0.5 to 2 weight percent dimethylsiloxane units.

**8.** The fiber of any one of claims 1-6, wherein the composition comprises 0 to 1 part per million by weight of colorants.

**9.** A method of forming a fiber, the method comprising:

melt spinning a composition to form a fiber;

wherein the composition comprises, based on the total weight of the composition,

90 to 98 weight percent of a block polyestercarbonate-polysiloxane comprising a polyester block comprising resorcinol ester units having the structure

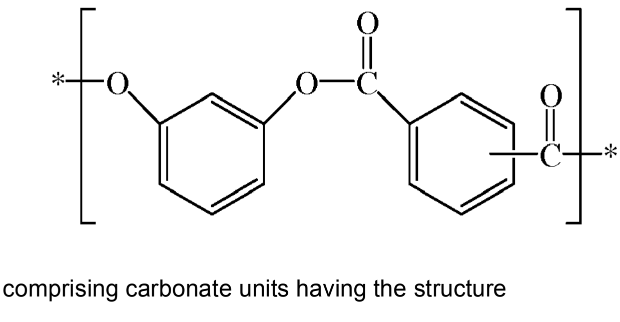,

a polycarbonate block comprising carbonate units having the structure

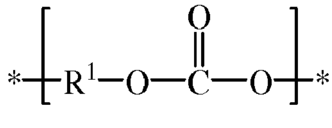

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene, and 5 to 35 mole percent of carbonate units wherein $R^1$ is

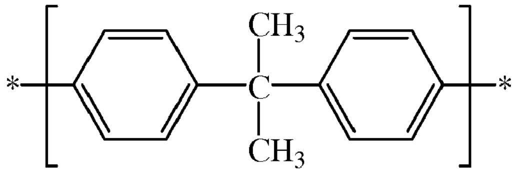

,

and

further comprises, based on the weight of the block polyestercarbonate-polysiloxane, 0.2 to 4 weight percent dimethylsiloxane units; and

2 to 10 weight percent of a flame retardant; and

wherein the fiber has an equivalent circular diameter of 10 to 60 micrometers.

**10.** The method of claim 9, wherein the melt spinning is **characterized by** a draw down ratio of 280 to 550, an apparent shear rate of 170 to 1700 second$^{-1}$, and a mechanical draw ratio of 0.95 to 1.2.

**11.** An article comprising the fiber of any one of claims 1-8.

**12.** The article of claim 11, wherein the article comprises a woven fabric comprising the fiber.

**13.** The article of claim 11, wherein the article comprises a knit fabric comprising the fiber.

**14.** The article of claim 11, wherein the article comprises a nonwoven fabric comprising the fiber.

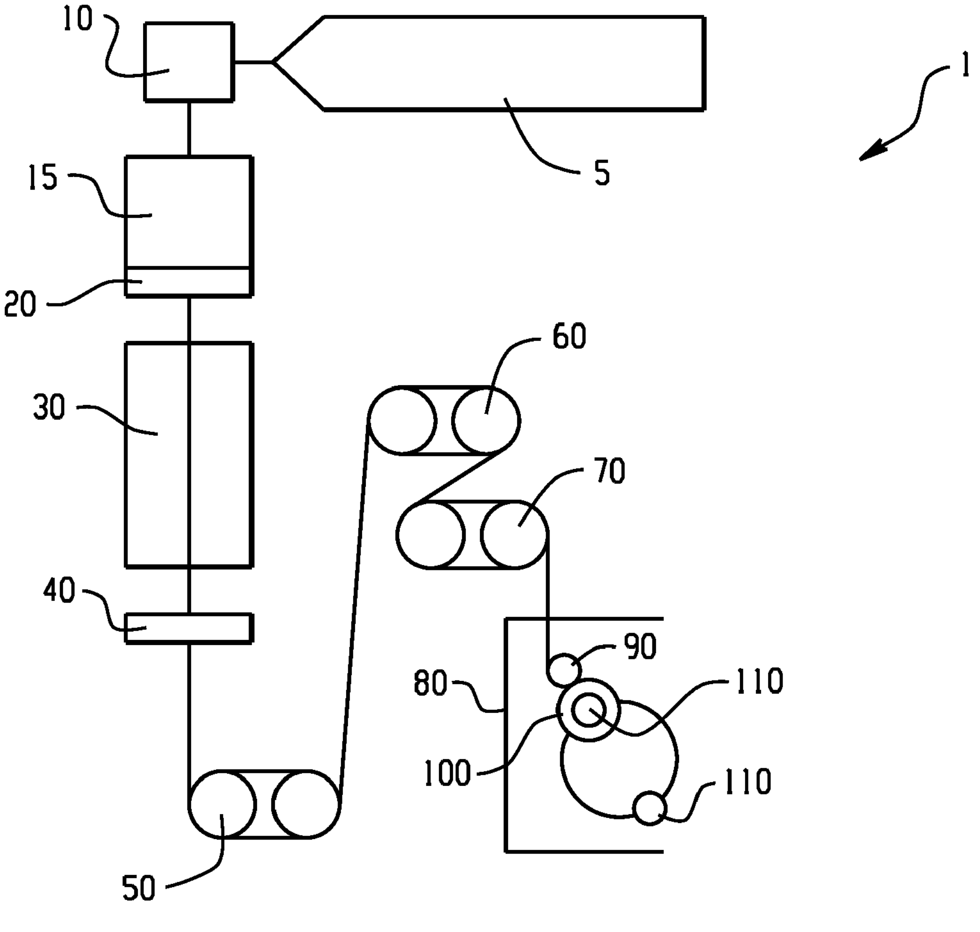
10
15
20
30
40
50
60
70
80
90
100
110
110
5
1

Europäisches Patentamt
European Patent Office
Office européen des brevets

# EUROPEAN SEARCH REPORT

Application Number
EP 18 19 7296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2007/129492 A1 (COLBORN ROBERT E [US] ET AL) 7 June 2007 (2007-06-07)<br>* paragraph [0007] - paragraph [0008] *<br>* paragraph [0244] *<br>* paragraph [0271] *<br>* paragraph [0277]; examples 2-1 to 2-16; table 2 *<br>* paragraph [0292]; examples 7-2 to 7-5; table 7 *<br>----- | 1,2,5-14<br>3,4 | INV.<br>C08G63/195<br>C08G63/60<br>C08G63/64<br>C08G77/448<br>C08L69/00<br>C08L83/10 |
| X<br>Y | US 2016/221298 A1 (TEUTSCH ERICH OTTO [US] ET AL) 4 August 2016 (2016-08-04)<br>* paragraph [0047] - paragraph [0067] *<br>* paragraph [0085] *<br>* paragraph [0096] *<br>----- | 1,2,5-14<br>3,4 | |
| Y | WO 2016/154519 A1 (SABIC GLOBAL TECHNOLOGIES BV [NL]; GALLUCCI ROBERT RUSSELL [US])<br>29 September 2016 (2016-09-29)<br>* paragraph [0068] - paragraph [0069] *<br>* paragraph [0087] - paragraph [0088] *<br>----- | 3,4 | TECHNICAL FIELDS SEARCHED (IPC)<br>C08G<br>C09J<br>C08L |

The present search report has been drawn up for all claims

1

| Place of search | Date of completion of the search | Examiner |
|---|---|---|
| Munich | 18 July 2019 | Meiser, Wibke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 19 7296

This annex lists the patent family members relating to the patent documents cited in the above-mentioned European search report. The members are as contained in the European Patent Office EDP file on
The European Patent Office is in no way liable for these particulars which are merely given for the purpose of information.

18-07-2019

| Patent document cited in search report | Publication date | Patent family member(s) | Publication date |
|---|---|---|---|
| US 2007129492 A1 | 07-06-2007 | CN 101528805 A | 09-09-2009 |
| | | EP 2049583 A1 | 22-04-2009 |
| | | TW 200831565 A | 01-08-2008 |
| | | US 2007129492 A1 | 07-06-2007 |
| | | WO 2008021673 A1 | 21-02-2008 |
| US 2016221298 A1 | 04-08-2016 | CN 107206735 A | 26-09-2017 |
| | | EP 3253913 A1 | 13-12-2017 |
| | | KR 20170122763 A | 06-11-2017 |
| | | US 2016221298 A1 | 04-08-2016 |
| | | WO 2016126959 A1 | 11-08-2016 |
| WO 2016154519 A1 | 29-09-2016 | CN 107429060 A | 01-12-2017 |
| | | EP 3274408 A1 | 31-01-2018 |
| | | KR 20170131575 A | 29-11-2017 |
| | | US 2018079903 A1 | 22-03-2018 |
| | | WO 2016154519 A1 | 29-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130260088 A1, David
- US 7790292 B2, Colborn
- US 6025419 A, Kasowski
- US 6015510 A, Jacobson
- US 9006324 B, Sybert

### Non-patent literature cited in the description

- *CHEMICAL ABSTRACTS,* 89492-23-9
- *CHEMICAL ABSTRACTS,* 78-33-1
- *CHEMICAL ABSTRACTS,* 57583-54-7
- *CHEMICAL ABSTRACTS,* 181028-79-5
- *CHEMICAL ABSTRACTS,* 115-86-6
- *CHEMICAL ABSTRACTS,* 68937-41-7
- *CHEMICAL ABSTRACTS,* 56803-37-3
- *CHEMICAL ABSTRACTS,* 65652-41-7
- *CHEMICAL ABSTRACTS,* 20208-95-1
- *CHEMICAL ABSTRACTS,* 15541 60-3
- *CHEMICAL ABSTRACTS,* 56386-64-2
- *CHEMICAL ABSTRACTS,* 119345-01-6
- *CHEMICAL ABSTRACTS,* 61951-89-1
- *CHEMICAL ABSTRACTS,* 81-77-6